# EUROPEAN PATENT APPLICATION

(11) **EP 2 887 715 A1**
(43) Date of publication of application: **24.06.2015**
(21) Application number: 13199126.7
(22) Date of filing: 20.12.2013
(51) Int. Cl.: H04W 12/00, H04L 29/06

(54) **Automatic pairing or connecting of devices**

(71) Applicant: GN Store Nord A/S, 2750 Ballerup (DK)
(72) Inventor: Jensen, Jakob, 2650 Hvidovre (DK)
(74) Representative: Inspicos A/S

(57) **Abstract**

A method and an assembly for setting up communication in two communication channels, where information required for setting up communication in a first communication channel is forwarded in a second communication channel so that, when communication has been set up in the second channel and the information transmitted, the receiving device may automatically set up communication in the first channel without user intervention.

## Description

The present invention relates to an automatic setting up of communication, such as pairing, over one communication channel via information exchanged via another communication channel between the same two devices.

In particular, the invention relates to a manner of pairing one set of Bluetooth modules via communication between an already paired set of Bluetooth modules so that multiple Bluetooth channels may be set up between the modules while only requiring a single, initial pairing requiring user involvement.

Hitherto, standard Bluetooth pairing has required some sort of user involvement, such as the user engaging a button or entering a PIN code into a device. However, when the devices have multiple independent Bluetooth modules, it has been found annoying to request the user to activate another Bluetooth channel between the same devices. The same situation exists in other types of wireless communication. The invention relates to a manner in which such second connection or pairing may be performed automatically.

A first aspect of the invention relates to a method of automatically connecting a first device with a second device, the method comprising:
i) deriving first connecting information from the first device for connecting in a first communication channel,
ii) storing the first connecting information in the first device,
iii) setting up a first communication in a second communication channel between the first and second devices,
iv) transferring, during the first communication, the first connecting information to the second device and
v) setting up a second communication in the first communication channel between the first and second devices using the first connecting information.

In the present context, the communication in the first and second communication channels preferably is wireless communication, such as via RF, such as Bluetooth, WiFi, GSM, NFC, or the like, optical signals, or the like. However, also wired communication may be used, even though in may wired situations, the connected devices will uncritically initiate communication.

In the wireless situation, connecting is often performed, where connecting is a respective identification of the communicating devices, as other devices may be present with which communication is not desired or allowed.

In this context, connecting is a process in which one device is set up to accept communication with another device and the other device is equally set up to accept communication with the first device.

Especially in Bluetooth modules, this situation is often termed pairing, which is the process in which the devices, often with the assistance of a user, are allowed to communicate in the future. Bluetooth modules exist, however, which are allowed to communicate with any device or module attempting communication there with.

The devices preferably store ID information or the like relating to other devices with which they have been connected/paired so that if communication is lost, re-setting-up of the communication does not require user intervention; communication is simply commenced again when possible. In Android devices, this ID may be a MAC address. In Apple products, this ID may be a special purpose address defined by e.g. the manufacturer of the device.

A device receiving a request or signal from another device with which it is not connected/paired may decide to ignore this signal/request, unless the signal/request comprises information indicating to the requested device that communication is allowed. This information, presently termed first connecting information, is information which the first device will recognize. As will be described below, the signal/request may comprise additional information allowing the two communicating devices to connect/pair without user intervention.

In this context, "automatic connecting" will mean that the connecting may be obtained without user intervention for that pair of devices. However, it may be desired that user intervention is required in order to set up the second communication channel over which the first connecting information is transmitted, as would the situation if this was a standard Bluetooth pairing. A pair of paired Bluetooth modules are then bonded, which means that they subsequently are free to communicate.

A device may be any type of device configured to communicate, such as a wireless device. Devices may be portable computers, tablets, mobile telephones, portable media players, headsets, GPS devices, speaker, camera or the like.

A device may be battery powered or powered by solar cells, fuel cell, wind power, the grid, or the like.

The first and second devices usually will be physically separate and/or powered by separate power supplies. One or both devices may be portable, if desired.

Usually, a device will comprise additional elements for generating/receiving the data to be communicated over the communication channel(s) or for utilizing or further processing the data received. A device, thus, may be a media player feeding audio signals to a headset which may be the other device. The media player/head set pair thus may be used as usual, but now two communication channels are possible, which may have different parameters.

In this context, a communication channel is a manner of transporting information, typically wirelessly. A communication channel may be defined by a frequency, channel number, timing (for use in e.g. frequency hopping), a protocol used, an encryption type or key used, for example. Two channels are different in at least one of the parameter(s) used for defining a communication channel, so that two devices communicating in one channel are preferably not disturbed by two devices communicating in another channel.

As mentioned above, the first connecting information is information on the basis of which the first device will accept to communicate.

The first connecting information may be derived from the first device in a number of manners. In one manner, the first device has two communication modules; one for communicating on each communication path. The same may be the situation in the second device. In this situation, one of the communication modules in the first device will accept communication using the first connecting information, and the other one will be transmitting the first connecting information. This information may then be stored within the other device. In most Bluetooth standards, the Bluetooth module has an internal memory in which this information may be stored.

In another situation, the first connecting information is stored in a storage within the first device or in a common storage if a common storage is used in the above-mentioned situation where the device has two communication modules.

The first connecting information may be stored in any type of storage, such as a Flash memory, hard drive, RAM, DRAM, SRAM or the like. This memory may be specific to a communication module of the device or may be accessible also by other parts of the device and/or other processes run on the device.

Naturally, the first connecting information need not specify the actual communication channel but merely e.g. the modules/device's own ID or an encryption key with which it is configured to communicate. Any device/module wishing to communicate and sending a request with that ID or encrypted with that key may be communicated with.

The setting up of a communication channel will differ from technology to technology. In some situations, the setting up of the second communication comprises one of the devices/modules searching for the other device, such as by scanning a wavelength interval or the like. Once the devices have identified each other or the channel, they may exchange information.

In Bluetooth, the initial setting up of a communication will require an initial connecting/pairing where the communicating elements are allowed to communicate in the future. Usually, this is a so-called pairing which requires user intervention, where a user is required to interact with a user interface of the devices/modules, such as pushing a button, entering a PIN code or the like, in order to allow the two devices/modules to communicate in the future. Later on, the devices/modules may then initiate communication when possible without user intervention.

Numerous Bluetooth standards or types, different pairing or connecting mechanisms exist:
Pairing mechanisms have changed significantly with the introduction of Secure Simple Pairing in Bluetooth v2.1. The following summarizes the pairing mechanisms:
   - Legacy pairing: This is the only method available in Bluetooth v2.0 and before. Each device must enter a PIN code; pairing is only successful if both devices enter the same PIN code. Any 16-byte UTF-8 string may be used as a PIN code; however, not all devices may be capable of entering all possible PIN codes.
   - Limited input devices: The obvious example of this class of device is a Bluetooth Hands-free headset, which generally have few inputs. These devices usually have a fixed PIN, for example "0000" or "1234", that are hard-coded into the device.
   - Numeric input devices: Mobile phones are classic examples of these devices. They allow a user to enter a numeric value up to 16 digits in length.
   - Alpha-numeric input devices: PCs and smartphones are examples of these devices. They allow a user to enter full UTF-8 text as a PIN code. If pairing with a less capable device the user needs to be aware of the input limitations on the other device, there is no mechanism available for a capable device to determine how it should limit the available input a user may use.
   - Secure Simple Pairing (SSP): This is required by Bluetooth v2.1, although a Bluetooth v2.1 device may only use legacy pairing to interoperate with a v2.0 or earlier device. Secure Simple Pairing uses a form of public key cryptography, and some types can help protect against man in the middle, or MITM attacks. SSP has the following characteristics:
   - Just works: As implied by the name, this method just works. No user interaction is required; however, a device may prompt the user to confirm the pairing process. This method is typically used by headsets with very limited IO capabilities, and is more secure than the fixed PIN mechanism which is typically used for legacy pairing by this set of limited devices. This method provides no man in the middle (MITM) protection.
   - Numeric comparison: If both devices have a display and at least one can accept a binary Yes/No user input, they may use Numeric Comparison. This method displays a 6-digit numeric code on each device. The user should compare the numbers to ensure they are identical. If the comparison succeeds, the user(s) should confirm pairing on the device(s) that can accept an input. This method provides MITM protection, assuming the user confirms on both devices and actually performs the comparison properly.
   - Passkey Entry: This method may be used between a device with a display and a device with numeric keypad entry (such as a keyboard), or two devices with numeric keypad entry. In the first case, the display is used to show a 6-digit numeric code to the user, who then enters the code on the keypad. In the second case, the user of each device enters the same 6-digit number. Both of these cases provide MITM protection.
   - Out of band (OOB): This method uses an external means of communication, such as Near Field Communication (NFC) to exchange some information used in the pairing process. Pairing is completed using the Bluetooth radio, but requires information from the OOB mechanism. This provides only the level of MITM protection that is present in the OOB mechanism.

SSP is considered simple for the following reasons:
- In most cases, it does not require a user to generate a passkey.
- For use-cases not requiring MITM (Man In The Middle) protection, user interaction can be eliminated.
- For numeric comparison, MITM protection can be achieved with a simple equality comparison by the user.
- Using OOB with NFC enables pairing when devices simply get close, rather than requiring a lengthy discovery process.

Presently, at least the following types of Bluetooth exist:
- Classic Bluetooth, based on legacy Bluetooth protocols,
- Bluetooth Low Energy, also known as Bluetooth Smart Ready and Bluetooth Smart and previously known as Bluetooth Ultra Low Power and WiBree is a subset of Bluetooth v4.0 with an entirely new protocol stack for rapid build-up of simple links. As an alternative to the Bluetooth standard protocols that were introduced in Bluetooth v1.0 to v3.0, it is aimed at very low power applications running off a coin cell. and
- Bluetooth High Speed, which is based on WiFi.

In other technologies, other types of initial setting up of communication may be seen.

Having now set up the communication, the first connecting information is transported to the second device which may then set up the communication in the first communication channel using the first connecting information.

As mentioned above, the first device may automatically allow communication when receiving a request based on the first connecting information, where the first connecting information may be comprised in the request, such as in the form of an ID, or the request may be generated on the basis of the first connecting information by e.g. being encrypted by a key represented by that information.

When the first device allows the communication, the above Bluetooth pairing or bonding may then be performed in order for the two devices to subsequently be allowed to communicate also in the first communication channel.

In one situation, as is mentioned above, step iii) comprises connecting a first Bluetooth module in the first device and a second Bluetooth module in the second device.

Then, preferably, the connecting of the first and second Bluetooth modules comprises storing, in the first device, first information and storing, in the second device, second information, a later step then may comprise setting up a communication in the second communication channel by one of the first and second devices forwarding a request based on the pertaining first/second information to the other of the first and second devices which, upon the request, accepts the communication with the one of the first and second devices. Again, the information may be an ID which is transmitted to the other device, or the information forwarded is encrypted by a key represented by the information, for example.

The first/second information may be used to set up the communication without user intervention after e.g. an initial connecting. When no communication has taken place, one Bluetooth module may forward a request to the other Bluetooth module based on the stored information, where the other module realizes from the request that the two modules are paired and allows communication.

In one embodiment, step v) comprises the second device forwarding a signal, based on the first connecting information, to the first device, where the first device reverts with a signal to the second device. In this situation, the returned signal may comprise information for use in the second device for subsequently allowing requests fed from the first device to the second device.

In a preferred embodiment, step v) comprises connecting a third Bluetooth module in the first device and a fourth Bluetooth module in the second device. When the first connecting information is fed to the third Bluetooth module, the connecting may be obtained with no user intervention.

Then, the connecting of the third and fourth Bluetooth modules may comprise the fourth Bluetooth module transmitting to the third Bluetooth module a request comprising the first connecting information and second connecting information and the third Bluetooth module accepting the communication and storing the second connecting information. The second connecting information may be used in the reverse situation, where the third Bluetooth module wishes to initiate communication with the fourth Bluetooth module.

Also, a later step may be performed comprising setting up a communication in the first channel by one of the third and fourth modules forwarding a request comprising the pertaining first/second connecting information to the other of the third and fourth modules which, upon the request, accepts the communication with the one of the third and fourth modules. This may be the situation where no communication has taken place for a period of time and now is to be set up again.

The above automatic connecting brings about the possibility of having two parallel communication channels between the first and second devices. This may be used for a number of purposes.

Different channels or different devices communication on the channels may have different parameters. Different channels may have different bandwidth and timing characteristics, for example, which may be important when streaming video or stereo sound, for example. On the other hand, different devices may have different power consumption. In Bluetooth, Bluetooth Classic, for example, has a larger bandwidth but a higher power consumption than Bluetooth Low Energy.

Then, the devices or modules may select the communication channel according to different parameters thereof, such as bandwidth/timing requirements and/or available power, desired operation time or the like.

In one situation, the second device operates an application requiring data transfer to the first device, the second device determining a bandwidth with which data transfer is desired and selects between the first and second communication channels in accordance therewith.

Thus, operation may be transporting data on one of the communication channels, where the application may enter a mode where a larger of smaller bandwidth - or different timing characteristics - is desired, whereby the data transport may be shifted to another communication channel. As all channels may be paired from the beginning, i.e. at the time of performing the first connecting of any communication channel between the devices, the shift in communication channel may be simple and swift.

Another situation where the automatic connection may be used is one wherein the first device comprises two separate parts, one configured for communication in the first communication channel and another configured for communication in the second communication channel. Connection of the one part in the second communication channel thus transfers the first connecting information enabling automatic and/or user independent connection in the first communication channel between the second device and the second part of the first device.

In one example, the first device is a set of two different headsets, such as a first headset comprising two small earphones for positioning in or at the ear canal of the person and connected only by wires and a second headset being two sound generators connected by an actuating element for biasing the generators toward the ears of the person. In this situation, the user may initially connect the second device, such as a mobile telephone, with the second headset from which the second device receives the first connection information relating now to the first headset. Thus, the user may now change between the two headsets while the second device will automatically connect thereto.

Naturally, the first headset may also therein have connecting information relating to the second headset so that the initial connection may be performed with the first headset where after automatic setting up of connection may take place also with the second headset.

Other pairs or bundles of elements which may form the first device may be a headset and loudspeakers.

A second aspect of the invention relates to a system comprising a first and a second device configured to communicate with each other, wherein:
i) the first device has a first and a third communication modules, the first communication module being configured to output a signal comprising first connecting information identifying the third communication module,
ii) the second device has a second and a fourth communication modules, where the first and second communication modules are configured to communicate with each other and the third and fourth communication modules are configured to communicate with each other,
iii) the second device has a processor configured to receive from the second communication module the first connecting information and forward the first connecting information to the fourth communication module,
iv) the fourth communication module is configured to transmit to the third communication module a request based on the first connecting information.

In this context, modules are configured to communicate with each other in a communication channel as defined above. Thus, these devices comprise communication elements as are known in the art, such as Bluetooth modules, WiFi devices, optical devices, RF devices, NFT devices or the like. Preferably, these devices are configured to perform wireless communication and thus comprises antennas/transducers/detectors/sensors or the like.

The first and third communication modules may be configured for the same overall type of communication, such as Bluetooth communication, or for different types of communication, such as Bluetooth communication and WiFi communication. As indicated above, the first and third communication modules may form part of the same element, such as attached to each other or via one or more common elements, such as a PCB. These elements may be powered by the same power supply and/or battery, for example. In another situation, the first and third communication modules may form part of two physically separate elements, such as two different headsets.

Preferably, the second and fourth communication modules form part of the same element and are connected to each other or a common element, such as a PCB, in order to easily transport the first connection information from the second to the fourth communication module. Naturally, however, this information may be transported also between two physically separate elements, if desired. The communication between the second and fourth communication modules may be the same or a different type of communication. In a preferred situation, this information is represented in a shared memory of the second device.

The first communication module may be configured to output the first connecting information in any desired manner and using any protocol and/or encryption key.

The processor of the second device may be a processor in addition to the fourth and second communication modules or may form part of one or both of these modules. A processor may be an ASIC, a DSP, a FPGA, a hardwired processor, a software controlled processor or a combination thereof. As mentioned, the information may be stored in a common memory by the second device and read there from by the fourth device.

The basing of the request on the first connecting information may, as described above, be a request comprising this information or encrypted with a key represented in or by this information. Also, the communication may be transmitted on a protocol or wavelength, for example, identifiable from this information. The information may describe the ID, key, protocol, wavelength directly or may be used to look this information up in e.g. a look-up table if desired.

As mentioned above, there are many manners in which the first connecting information is derived and/or fed to the first device. In one situation, the third communication module is configured to output the first connection information or information from which this may be derived or determined, when receiving a predetermined signal. Thus, during manufacture, for example, this signal may be fed to the third communication module and the first connection information derived and fed to the first communication module.

In other situations, the first communication module may be configured to obtain this information directly from the third communication module or from e.g. a common storage in which this information is stored.

In one embodiment, the first device comprises a first user interface engageable by the user as well as a first processor connected to the first user interface and the first and third communication modules, the processor being configured to allow the third communication module to communicate when having received predetermined information from the user interface.

In this manner, a standard Bluetooth pairing may be performed. A user interface may be quite simple, such as a push button, a rotary dial or the like, or may be more complex, such as a keyboard, a touch pad or the like. Thus, the user interaction may simply be a pushing of a push button. In other situations, the user interaction is the entering of a pre-determined number or code.

The processors may in this connection be the same as the above processor or different processors. The types of processors may be the same or different.

In one embodiment, the first processor is configured to allow the third communication module to communicate, when the third communication module has received a request based on the first connecting information.

The first processor may make this determination on the basis of the first request, such as if the first information is present therein, if the request is encrypted by the first information or if the request is based on a protocol, for example, determined by the first information.

In one embodiment, the second device comprises a second user interface engageable by the user as well as a second processor connected to the second user interface and the second and fourth communication modules, the processor being configured to allow the second communication module to communicate when having received predetermined information from the user interface.

The user interface may be of the above types, as may the processor. The determination to allow the communication may also be as that described above.

In one embodiment, the second device comprises a processor configured to:
- determine a parameter of data desired transmitted to the first device,
- select one of the second and fourth communication modules from the parameter determined and
- forward the data to the selected communication module for transmission to the first device.

This is the situation where the second device is capable of determining which of the first and second communication to use, depending on the parameter.

The data to be transmitted may be an amount, a type, a bandwidth required, timing requirements thereof or the like.

A larger amount of data, a critical type of data, such as video/audio compared to a ftp file transfer, a high bandwidth required or a stringent requirement on the timing of the signal may require a certain type of communication channel with a high bandwidth or complying with more stringent timing requirements, compared to a small amount of data or low bandwidth data.

Data requiring a high bandwidth may be the transfer of real time video or audio.

Data requiting stringent timing may be the feeding of stereo audio. Timing relationship may be a maximum allowable delay of one part of the signal, such as one packet, compared to a previous or later package.

Data requiring a low bandwidth and having a lower timing requirement may be position data or mono audio signals

Again, the processor may be one of the above processors or an additional processor.In the following, a preferred embodiment of the invention will be described with reference to the drawing, wherein:
- figure 1 illustrates a preferred embodiment according to the invention,
figure 2 illustrates an alternative device for use in the embodiment of figure 1 and
- figure 3 is a flow chart illustrating the communication between the devices of figure 1.

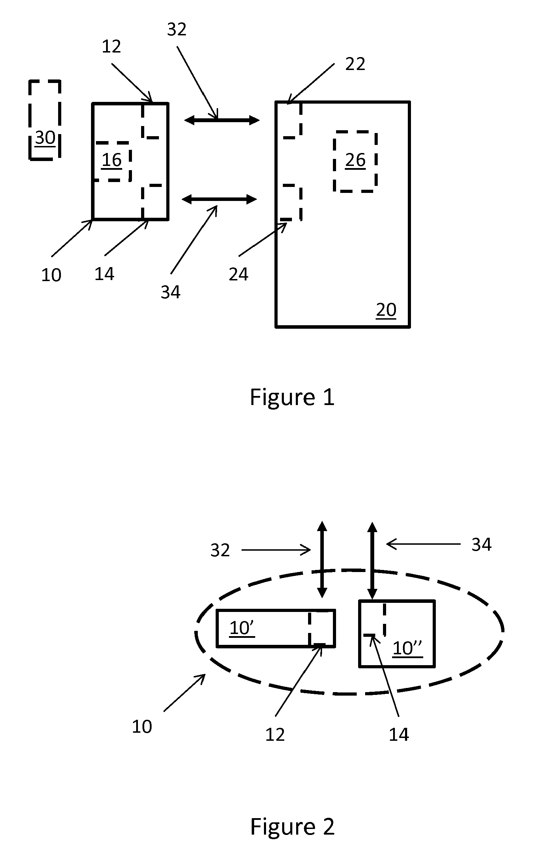

In figure 1, two communicating devices 10 and 20 are illustrated. These devices may be a wireless headset 10 and a media player 20, such as a mobile telephone or an iPod. Information or data may be desired fed only from the media player 20 to the headset 10, as is the situation when the media player is used solely for providing audio to the user via the headset 10. Alternatively, two way communication may be desired if the headset 10 comprises a microphone for deriving an audio signal to be fed to the media player 20, where the headset 10 has a GPS for providing positioning data to the media player/mobile phone and/or where the headset 10 comprises a user interface, such as a push button, for feeding information to the media player 20 e.g. for controlling it.

In this embodiment, the headset 10 comprises a first Bluetooth communication module 12 and a third Bluetooth communication module 14. The media player 20 comprises a second Bluetooth communication module 22 and a fourth Bluetooth communication module 24. The first and second modules 12/22 are configured to communicate on the same channel 32, which may be defined in a number of manners, such as by a frequency, a protocol used and/or an encryption key used for encoding the data transmitted between the first and third modules.

In the same manner, the third and fourth modules 14/24 are configured to communicate on the same channel 34, which may be defined, as the first channel, in a number of manners, such as by a frequency, a protocol used and/or an encryption key used for encoding the data transmitted between the first and second modules. The first and second channels 32, 34 are different either in frequency, in protocol and/or in any encryption key used.

In the headset 10, an element 16 is illustrated which may comprise a processor for controlling the operation of the headset 10. The element 16 may comprise a storage into which suitable data may be fed. Also, a battery may be present, as may one or more sound generators, sound detectors, position detectors or the like. The element 16 further may comprise a user interface as described above.

Alternatively or additionally, the first module 12 may comprise a storage for holding information which may be transferred to the second module 22 when these modules communicate.

During production or assembly of the headset 10, it is brought into close proximity with a contacting element indicated at 30, which will initiate communication with the third module 14 and receive, from the module 14, first connecting information which is stored in the element 16 and/or a storage of the first module 12.

During a later connecting or pairing of the headset 10 with the media player 20, a standard Bluetooth pairing takes place between the first and second modules 12/22.

This pairing will usually require the user to acknowledge that the first and second modules 12/22 or actually the headset 10 and media player 20 are paired or bonded. Subsequently, the first and second modules 12/22 may initiate communication at any point in time without requiring user intervention.

Usually, a pairing or bonding is the storage in one module the address/ID of the other. Often, also or alternatively, the two paired/bonded modules share an encryption key and will accept communication that is encrypted by this shared key, taking this as a sign that the communication is with the other module.

During this pairing, the first connecting information is transferred from the storage in the headset 10 to the media player 20.

Once this first connecting information is transferred to the media player 20, it may be fed to the fourth module 24 which may then initiate communication or pairing with the third module 14. The third module 14 will accept the connecting request, as it will contain the first connecting information, which may be an address or ID of the third module 14, where after also the third and fourth modules 14/24 are paired and may commence communication without further user interaction.

Having now two different or alternative channels for communication, different situations may be handled.

In a preferred embodiment, the communication in the channel 32 may be based on a so-called Bluetooth Low Energy and the communication in the channel 34 may be based on a so-called Bluetooth Classic which as a larger bandwidth but also a larger power consumption than the Bluetooth Low Energy.

Then, when the required data bandwidth between the headset 10 and the media player 20 is relatively low, the communication may be handled via the Bluetooth Low Energy channel 32, whereas if the bandwidth requirement increases, the Bluetooth Classic connection 34 may be opened (this requires no user interaction) and the data may be transferred with a higher bandwidth.

The determination of which channel 32/34 to use may be handled by an application run on a processor 26, which may also comprise a user interface, of the media player 20 and/or in the headset 10, such as on a processor of element 16.

In another embodiment of the invention, the first device 10, as is seen in figure 2, may comprise two parts, 10' and 10" which are physically separate or separable. One part 10' has the first module 12 and the other part 10" has the third module 14. The first and third modules 12/14 communicate as usual with the second device 20.

As before, the first connecting information is transferred from the first module 12 to the second module 22. Now, however, the second device 20 is able to initiate communication with the second part 10" with which it may never have communicated, as the first connecting information facilitating this has been stored in or transferred to the first part 10'.

This storing in or transferring may be performed as mentioned above at manufacture, for example, where the first part 10' is encoded with this information which may also be encoded into the second part 10" or may be derived there from prior to encoding in the first part 10'.

Naturally, the choice in circuits for the present invention may vary. It may be desired to use standard of the shelf components, where the circuits 12, 14 and 16, for example, are individual circuits. Dual mode circuits, do exist, however, which are able to operate in different Bluetooth modes (classic and Low Energy, for example), so the modules 12 and 14 may be embodied in a single circuit. Also, all circuits of a device/module may be embodied in a single chip if desired.

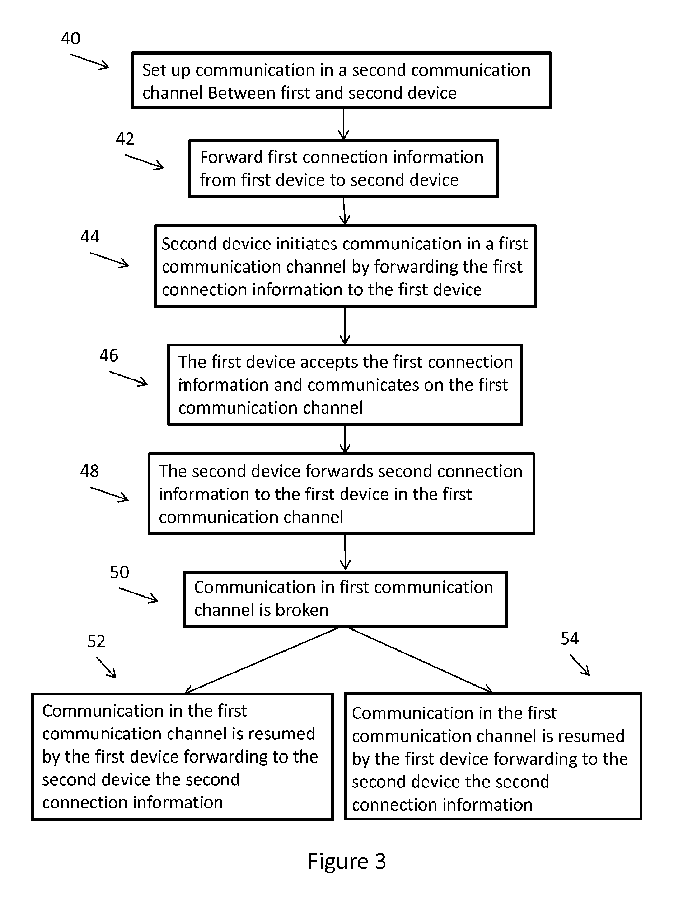

In figure 3, the communication is illustrated in which, before step 40, no communication takes place between the first and second devices. In step 40, communication takes place in the second channel. This communication may be set up or initiated in any manner. During this communication, in step 42, the first connection information is fed from the first to the second device.

In step 44, communication in set up in the first communication channel by the second device forwarding the first connection information to the first device and thus informs the first device that communication with the second device is acceptable.

As a result, the first device, in step 46, accepts the communication or information and communicates with the second device in the first communication channel.

During this communication, as is seen in step 48, the second device may forward second connection information to the first device. An advantage thereof is seen in the below step 52 where, after communication in the first communication channel has been broken (step 50), the first device may initiate communication in the first communication channel by forwarding to the second device the second connection information on the basis of which the second device may accept communication on the second communication channel.

After step 50, alternatively, the communication in the second communication channel may be resumed by the second device, again, forwarding the first connection information to the first device - step 54.

In the preferred embodiment, the invention is illustrated as a combination of a headset and a media player. Naturally, numerous other types of elements may be brought to communicate using the invention, such as loudspeakers, cameras, printers, GPS modules, mobile telephones, computers, tablets, sensors, or the like.

## Claims

1. A method of automatically connecting a first device with a second device, the method comprising:
i) deriving first connection information from the first device for connecting in a first communication channel,
ii) storing the first connecting information in the first device,
iii) setting up a communication in a second communication channel between the first and second devices,
iv) transferring, during the communication, the first connecting information to the second device and
v) setting up a second communication in the first communication channel between the first and second devices using the first connecting information.

2. A method according to claim 1, wherein step iii) comprises connecting a first Bluetooth module in the first device and a second Bluetooth module in the second device.

3. A method according to claim 2, wherein the connecting of the first and second Bluetooth modules comprises storing, in the first device, first information and storing, in the second device, second information, a later step comprising setting up a communication in the second communication channel by one of the first and second devices forwarding a request based on the pertaining first/second information to the other of the first and second devices which, upon the request, accepts the communication with the one of the first and second devices.

4. A method according to any of the preceding claims, wherein step v) comprises the second device forwarding a signal, based on the first connecting information, to the first device, where the first device reverts with a signal to the second device.

5. A method according to any of the preceding claims, wherein step v) comprises connecting a third Bluetooth module in the first device and a fourth Bluetooth module in the second device.

6. A method according to claim 5, wherein the connecting of the third and fourth Bluetooth modules comprises the fourth Bluetooth module transmitting to the third Bluetooth module a request comprising the first connecting information and second connecting information and the third Bluetooth module accepting the communication and storing the second connecting information.

7. A method according to claim 6, further comprising the later step comprising setting up a communication in the first channel by one of the third and fourth modules forwarding a request comprising the pertaining first/second connecting information to the other of the third and fourth modules which, upon the request, accepts the communication with the one of the third and fourth modules.

8. A method according to any of the preceding claims, wherein step iv) comprises storing the first connecting information in the second device.

9. A method according to any of the preceding claims, wherein the second device operates an application requiring data transfer to the first device, the second device determining a bandwidth with which data transfer is desired and selects between the first and second communication channels in accordance therewith.

10. A system comprising a first and a second device configured to communicate with each other, wherein:
i) the first device has a first and a third communication modules, the first communication module being configured to output a signal comprising first connecting information identifying the third communication module,
ii) the second device has a second and a fourth communication modules, where the first and second communication modules are configured to communicate with each other and the third and fourth communication modules are configured to communicate with each other,
iii) the second device has a processor configured to receive from the second communication module the first connecting information and forward the first connecting information to the fourth communication module,
iv) the fourth communication module is configured to transmit to the third communication module a request based on the first connecting information.

11. A system according to claim 10, wherein the first device comprises a first user interface engageable by the user as well as a first processor connected to the first user interface and the first and third communication modules, the first processor being configured to allow the third communication module to communicate when having received predetermined information from the user interface.

12. A system according to claim 10 or 11, wherein the first processor is configured to allow the third communication module to communicate, when the third communication module has received a request based on the first connecting information.

13. A system according to any of claims 10-12, wherein the second device comprises a second user interface engageable by the user as well as a second processor connected to the second user interface and the second and fourth communication modules, the second processor being configured to allow the second communication module to communicate when having received predetermined information from the user interface.

14. A system according to any of claims 10-13, wherein the second device comprises a processor configured to:
- determine a parameter of data desired transmitted to the first device,
- select one of the second and fourth communication modules from the parameter determined and
- forward the data to the selected communication module for transmission to the first device.
